(19) Europäisches Patentamt
European Patent Office
Office européen des brevets

(11) **EP 1 407 230 B1**

(12) **EUROPÄISCHE PATENTSCHRIFT**

(45) Veröffentlichungstag und Bekanntmachung des Hinweises auf die Patenterteilung:
**31.03.2010 Patentblatt 2010/13**

(21) Anmeldenummer: **02745126.9**

(22) Anmeldetag: **06.06.2002**

(51) Int Cl.:
***G01D 5/245*** *(2006.01)*

(86) Internationale Anmeldenummer:
**PCT/DE2002/002052**

(87) Internationale Veröffentlichungsnummer:
**WO 2003/004974 (16.01.2003 Gazette 2003/03)**

(54) **VERFAHREN UND VORRICHTUNG ZUR BESTIMMUNG EINES DREHWINKELS ODER WEGES**

METHOD AND DEVICE FOR DETERMINING A ROTATION ANGLE OR A DISPLACEMENT

PROCEDE ET DISPOSITIF POUR DETERMINER UN ANGLE DE ROTATION OU UNE COURSE

(84) Benannte Vertragsstaaten:
**DE ES FR GB IT SE**

(30) Priorität: **05.07.2001 DE 10132685**

(43) Veröffentlichungstag der Anmeldung:
**14.04.2004 Patentblatt 2004/16**

(73) Patentinhaber: **ROBERT BOSCH GMBH**
**70442 Stuttgart (DE)**

(72) Erfinder:
• **STEINLECHNER, Siegbert**
**71229 Leonberg (DE)**
• **WENZLER, Axel**
**71229 Leonberg (DE)**
• **MARX, Klaus**
**70565 Stuttgart (DE)**

(56) Entgegenhaltungen:
**DE-A- 4 217 498     DE-A- 19 506 938**
**JP-A- 08 304 113    US-A- 4 991 125**

**Beschreibung**

Die vorliegende Erfindung betrifft ein Verfahren und eine Vorrichtung zur Bestimmung eines Drehwinkels oder Weges nach den Oberbegriffen der Patentansprüche 1 bzw. 9.

Stand der Technik

Bei verschiedenen Anwendungen, insbesondere bei Einrichtungen, mit deren Hilfe die Winkelstellung einer drehbaren Welle ermittelt werden soll, besteht das Bedürfnis, die genaue Winkelstellung der Welle zu kennen. Diese Forderung lässt sich beispielsweise mit Hilfe von analogen Winkelsensoren, beispielsweise Potentiometern, realisieren, die in jeder Position nach dem Einschalten sofort den gültigen Winkelstellungswert in Form einer Spannung ausgeben.

Werden solche Einrichtungen zur Winkelmessung für Winkelbereiche, die größer als 360° sind, eingesetzt, ergibt sich das Problem, dass nicht mehr feststellbar ist, in welcher Umdrehung sich die Welle befindet. Zur Auswertung von Winkelbereichen, die größer als 360° sind, können jedoch inkrementale Geber verwendet werden, bei denen die Winkelstellung durch Vor- und Rückwärtszählen von Impulsen ermittelt wird.

Mit solchen Inkrementalgebern lässt sich jedoch keine Absolutwinkelmessung durchführen, denn es können nur Inkremente gezählt werden, die sich an einem Aufnehmer vorbeibewegen.

Bei einigen technischen Messaufgaben entstehen bei Verwendung von Inkrementalgebern Phasenmesswerte, aus denen die eigentlich zu messenden Größen, wie z.B. ein Winkel, ein Weg oder ein Abstand zu bestimmen sind. Zur Vergrößerung des Eindeutigkeitsbereiches (entsprechend einem Phasenbereich von 0 - $2\pi$) ist es möglich, wenigstens einen weiteren Messkanal mit einer anderen Phasensteigung einzusetzen und aus einer geeigneten Kombination der Messwerte einen größeren Eindeutigkeitsbereich abzuleiten.

Beispiele hierzu sind die Entfernungsmessung mit RADAR oder mit moduliertem Laserlicht. Es werden hierbei N-Messungen mit verschiedenen Frequenzen $f_1, ... f_N$ durchgeführt. Die von einem Ziel in einem Abstand x reflektierten Signale besitzen am Empfängerort die Phasenverschiebungen (c = Lichtgeschwindigkeit)

$$\alpha_i = \frac{2 \cdot \pi \cdot f_i \cdot 2 \cdot x}{c}$$

Die Phasenverschiebungen sind also zu der zu messenden Größe und der benutzten Frequenz proportional. Jedoch liegen die tatsächlichen Messwerte der Phasen immer im Bereich 0 bis $2\pi$, sind also immer nur bis auf ganzzahlige Vielfache von $2\pi$ bestimmt.

Als weiteres Beispiel sei ein optischer Winkelgeber genannt. Hier erfolgt eine Abtastung von N optischen Strichgittern, wobei auf einer Scheibe oder einem Zylinder N Spuren mit optischen Strichgittern aufgebracht sind. Auf eine Umdrehung kommen dabei jeweils $n_i$ Perioden bzw. Striche. Mißt man die Phasenlagen der Spuren mit Hilfe optoelektronischer Detektoren relativ zu einem feststehenden Messfenster, erhält man die Phasenlagen

$$\alpha_i = (n_i \cdot \phi) \text{ modulo } (2\pi).$$

Die Phasen sind also zu dem Verdrehwinkel $\phi$ und den Periodenzahlen proportional. Auch hier liegen die tatsächlichen Messwerte der Phasen immer im Bereich 0 bis $2\pi$.

Es sei schließlich auf die Mehrwellenlängen-Interferometrie verwiesen. Auch hier werden z.B. Wege x unter Einsatz von wenigstens zwei verschiedenen Lichtwellenlängen $\lambda_i$ vermessen, wobei sich ein vergrößerter Eindeutig-keitsbereich von

$$\Lambda = \frac{\lambda_2 \cdot \lambda_1}{\lambda_2 - \lambda_1}$$

ergibt. Auch hier erfolgt bei entsprechender Dimensionierung ein wie oben angegebener Phasenverlauf.

Die Auswertung der mit derartigen Verfahren erhaltenen Signale, also die Bestimmung von x bzw. $\phi$, erfolgt beispielsweise mit Noniusverfahren.

Beim klassischen Noniusverfahren wird hierbei die Differenz aus zwei Phasensignalen gebildet, wobei für den Fall, dass diese Differenz kleiner als Null ist, $2\pi$ addiert wird. Dieses Verfahren hat starke Einschränkungen, da Messfehler in den Phasen voll auf das Endergebnis durchschlagen. Ferner funktioniert ein derartiges Verfahren nur, wenn die beiden betrachteten Periodenzahlen sich um genau 1 unterscheiden.

Aus der DE-OS 195 06 938 ist ein modifiziertes Noniusverfahren bekannt, bei welchem aus zwei Phasensignalen durch gewichtete Addition und die weitere Addition einer winkelbereichsabhängigen Konstanten der Wert einer zu messenden Größe bestimmt wird. Dieses Verfahren zeichnet sich dadurch aus, dass Messfehler in den Phasensignalen deutlich reduzierbar sind. Auch für dieses Verfahren ist es jedoch notwendig, dass sich die beiden betrachteten Periodenzahlen um genau 1 unterscheiden.

Aus der DE-P 1004260 ist schließlich ein Verfahren zur Bestimmung eines Drehwinkels oder Abstandes durch Auswertung von Phasenmesswerten bekannt. Bei diesem Verfahren werden die in einem N-dimensionalen Raum gemessenen Phasenwerte mittels einer linearen Transformation A in N-1 neue Signale $S_i$ abgebildet. Diese Signale $S_i$ werden mit einer Quantisierungseinrichtung in entsprechende ganzzahlige Werte $W_i$ transformiert und mittels einer linearen Abbildung C in N reelle Werte $Z_i$ umgeformt. Zu diesen Werten werden gewichtete Phasenmesswerte $\alpha_i$ modulo $2\pi$ addiert, wodurch man N Schätzwerte für den zu messenden Winkel $\pi$ erhält. Die N Schätzwerte werden gegebenenfalls an ihren Sprungstellen korrigiert und unter Berücksichtigung ihres Phasenwinkels gewichtet aufsummiert.

Die Erfindung strebt an, in möglichst einfacher Weise Messwerte für Strecken x bzw. Winkel $\phi$ auf der Grundlage von wenigstens zwei Phasenmesswerten zur Verfügung zu stellen. Hierbei soll die bei herkömmlichen Verfahren enthaltene Bedingung, dass sich die beiden Periodenzahlen um genau 1 unterscheiden müssen, nicht mehr notwendig sein.

Dieses Ziel wird erreicht mit einem Verfahren mit den Merkmalen des Patentanspruchs 1 sowie einer Vorrichtung mit den Merkmalen des Patentanspruchs 9.

Vorteile der Erfindung

Erfindungsgemäß ist nun ein besonders einfaches Verfahren zur Verfügung gestellt, mit dem sich zu bestimmende Messwerte, beispielsweise ein Winkel $\phi$ oder ein Weg bzw. eine Strecke x, zuverlässig bestimmen lassen. Gegenüber herkömmlichen Verfahren ist eine weitgehende Freiheit in der Wahl der Periodenzahlen zur Bestimmung von wenigstens zwei Phasensignalen zur Verfügung gestellt. Die erfindungsgemäß vorgesehene Gewichtung der einzelnen Messwerte bzw. Schätzwerte erweist sich als rechnerisch in besonders einfacher Weise durchführbar.

Vorteilhafte Ausgestaltungen des erfindungsgemäßen Verfahrens bzw. der erfindungsgemäßen Vorrichtung sind Gegenstand der Unteransprüche.

Gemäß einer ersten bevorzugten Ausführungsform des erfindungsgemäßen Verfahrens wird, für den Fall der Bereitstellung zweier Phasenwerte $\alpha_1$, $\alpha_2$, der Arbeitswert k, welcher im Rahmen der Bestimmung eines Drehwinkels oder eines Weges verwendet wird, durch Rundung des Ausdrucks

$$\left[ \frac{\alpha_1 \cdot n_2 - \alpha_2 \cdot n_1}{2 \cdot \pi} \right]$$

berechnet. Hierbei werden zwei Phasenwerte $\alpha_1$, $\alpha_2$ ausgewertet, welche jeweils von $n_1$ bzw. $n_2$ Perioden aufweisenden Sensoren bzw. Gebern erhalten werden. Die Bereitstellung und Verwendung eines derartigen Arbeitswertes auf der Grundlage zweier Phasenwerte ist rechnerisch in einfacher Weise durchführbar. Als Rundung wird hierbei das Ersetzen des berechneten Wertes durch die nächste, kleinere oder größere, ganze Zahl verstanden. Die Abweichung des berechneten Ausdruckes von der nächsten ganzen Zahl stellt ein Maß für die erzielbare Genauigkeit des Verfahrens dar.

Zweckmäßigerweise wird eine Normierungsbeziehung zwischen den Periodenzahlen $n_1$, $n_2$ als Gleichung der Form

$$k_2 \cdot n_1 - k_1 \cdot n_2 = 1$$

gewählt. Vorteilhafterweise wird von den unendlich vielen Lösungspaaren $k_1$, $k_2$ dasjenige mit den kleinsten Zahlenwerten verwendet.

Gemäß einer besonders bevorzugten Ausführungsform des erfindungsgemäßen Verfahrens werden die wenigstens zwei normierten Schätzwerte in der Form

$$\frac{\Phi s_i}{2 \cdot \pi} = \frac{\frac{\alpha_i}{2 \cdot \pi} + k \cdot k_i}{n_i}$$

mit i = 1, 2 ... N, k = Arbeitswert, berechnet.

Es ist ferner bevorzugt, dass die gewichtete Summation der wenigstens zwei normierten Schätzwerte zum Erhalt eines gemittelten Schätzwertes $\Phi_{mess}$ in der Form

$$\frac{\Phi_{mess}}{2 \cdot \pi} = \sum_{i=1}^{N} \left[ \frac{\Phi s_i}{2 \cdot \pi} \cdot g_i \right]_{mod(1)}$$

durchgeführt wird, wobei die $g_i$ (i = 1, 2 ... N) Gewichtungsfaktoren darstellen, für die gilt $\Sigma g_i = 1$.

Die berechnete Summe ist modulo 1 zu nehmen (d.h. nur die Nachkommastellen sind zu betrachten). Der so erhaltene Schätzwert $\Phi_{mess}$ für den zu bestimmenden Winkel $\Phi$ erweist sich als in sehr genauer und zuverlässiger Weise bereitstellbar.

Im Falle von zwei Phasenmesswerten ist es zweckmäßig, die Gewichtungsfaktoren $g_1$, $g_2$ jeweils gleich 0,5 zu setzen. Diese Festlegung erweist sich für zahlreiche Anwendungen als ausreichend genau.

Eine Verbesserung der Genauigkeit des Schätzwertes $\Phi_{mess}$ bei gleich wahrscheinlichen additiven Messfehlern in $\alpha_1$ und $\alpha_2$ ergibt sich, wenn gemäß einer weiteren bevorzugten Ausführungsform des erfindungsgemäßen Verfahrens die Gewichtsfaktoren in der Form

$$g_i = \frac{n_i^2}{\sum_1^N n_i^2}$$

bereitgestellt werden. Diese Gewichtung ist im Sinne des minimalen Fehlerquadrats optimal. Diese Gewichtung erweist sich insbesondere für Systeme mit mehr als zwei auszuwertenden Phasensignalen, d.h. für N > 2, als sehr geeignet.

Gemäß einer weiteren bevorzugten Ausführungsform werden die Gewichtsfaktoren in der Form

$$g_i' = \frac{n_i \cdot w_i}{2^q} \quad mit \quad \sum_{i=1}^{N} w_i n_i = 2^q$$

bereitgestellt, wobei die $w_i$ ganze Zahlen darstellen, und derart gewählt werden, dass die Gewichte $g_i'$ dem idealen Gewicht $g_i$ möglichst nahe kommen. Die natürliche Zahl q bestimmt hierbei die erreichbare Genauigkeit. Diese Wahl der Gewichtsfaktoren erweist sich als rechnerisch besonders einfach durchführbar, da bei Bereitstellung derartiger Gewichtsfaktoren die Division durch den Ausdruck

$$\sum_1^N n_i^2$$

**4**

bzw. die Multiplikation mit dem Kehrwert dieses Ausdrucks entfällt. Es ist hier lediglich eine Division durch die Zweierpotenz $2^q$ notwendig, was rechnerisch bei einer Zweierkomplementdarstellung durch eine einfache Stellenverschiebung um q Stellen nach rechts realisierbar ist. Die Summation wird mit q Bits zweckmäßigerweise ohne Beachtung von Teilsummenüberläufen berechnet.

Bevorzugte Ausgestaltungen der Erfindung werden nun unter Bezugnahme auf die beigefügte Zeichnung weiter erläutert. In dieser zeigt

Fig. 1      ein Schaubild zur Darstellung eines auf der Grundlage von zwei Phasensignalen $\alpha_1$, $\alpha_2$ mittels des erfindungsgemäßen Verfahrens bereitstellbaren Schätzwertes $\Phi_{mess}$,

Fig. 2      ein Blockschaltbild einer ersten bevorzugten Ausführungsform der erfindungsgemäßen Vorrichtung bzw. Schaltung, mit der das erfindungsgemäße Verfahren durchführbar ist,

Fig. 3      eine bevorzugte Ausführungsform einer Schaltung zur Bildung von gewichteten Summen für ein System mit N Phasensignalen, und

Fig. 4      ein Flussdiagramm zur weiteren Erläuterung einer bevorzugten Ausführungsform des erfindungsgemäßen Verfahrens.

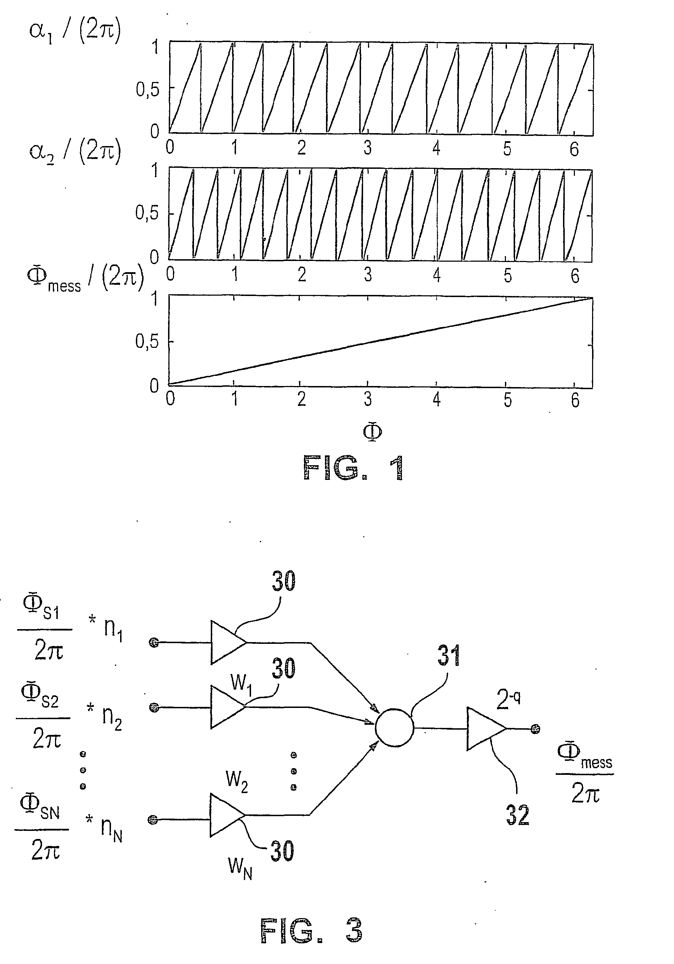

Anhand der Figur 1 wird nun zunächst das erfindungsgemäße Verfahren am Beispiel von zwei gleichzeitig betrachteten Phasenmesswerten $\alpha_1$, $\alpha_2$ (N = 2) erläutert.

Ein Sensor, beispielsweise ein optischer Winkelsensor mit zwei Spuren, liefert zwei gemessene Phasenwerte $\alpha_1$ und $\alpha_2$. Die zwei Spuren weisen eine $n_1$- bzw. $n_2$-periodische Struktur auf. Die Werte $n_1$ und $n_2$ sind die Periodenzahlen der einzelnen Spuren. Zunächst sei angenommen, dass $n_1$ und $n_2$ teilerfremd sind. Diese Strukturen sind beispielsweise mit an sich bekannten Strichgittern realisierbar. Die Phasenwerte $\alpha_1$ und $\alpha_2$ sind in den oberen zwei Zeilen in der Figur 1 beispielhaft für $n_1$ = 13 und $n_2$ = 17 gegen den eigentlichen, zu messenden Winkel $\Phi$ aufgetragen (jeweils mittels Division durch $2\pi$ auf 1 normiert). Wenn der zu bestimmende mechanische Drehwinkel $\Phi$ eine Umdrehung (360° bzw. $2\pi$) überstreicht, so durchlaufen die Phasenwerte $\alpha_1$ und $\alpha_2$ $n_1$- bzw. $n_2$-Mal ihren jeweiligen Messbereich.

Aus den in der Regel digital vorliegenden Phasenwerten $\alpha_1$, $\alpha_2$ wird in einem ersten Schritt als Arbeitswert eine ganze Zahl k gemäß

$$k = \mathrm{runden}\left[\frac{\alpha_1 \cdot n_2 - \alpha_2 \cdot n_1}{2 \cdot \pi}\right] \qquad \text{(Gleichung (1))}$$

ermittelt.

Unter "runden" wird hierbei das Auf- oder Abrunden auf die nächst ganze Zahl verstanden. In einem zweiten Schritt werden zwei normierte Schätzwerte $\phi_{s1}/2\pi$ und $\phi_{s2}/2\pi$ für die zu bestimmende Größe $\phi$ bestimmt:

$$\frac{\Phi_{s1}}{2 \cdot \pi} = \frac{\dfrac{\alpha_1}{2 \cdot \pi} + k \cdot k_1}{n_1}$$

$$\frac{\Phi_{s2}}{2 \cdot \pi} = \frac{\dfrac{\alpha_2}{2 \cdot \pi} + k \cdot k_2}{n_2} \qquad \text{(Gleichung (2))}$$

Hierbei sind $k_1$ und $k_2$ feste Faktoren, die für gegebene Periodenzahlen nur einmal zu bestimmen sind. Genauer gesagt, sind $k_1$ und $k_2$ beliebige ganzzahlige Lösungen der Gleichung

$$k_2 \cdot n_1 - k_1 \cdot n_2 = 1 \qquad \text{(Gleichung (3))}.$$

Aus den unendlich vielen Lösungen kann z.B. diejenige mit den kleinsten Zahlwerten genommen werden. Beispielsweise sind für die Periodenzahlen $n_1 = 13$ und $n_2 = 17$ sinnvolle Lösungen $k_1 = 3$ und $k_2 = 4$.

In einem dritten Schritt erfolgt eine gewichtete Summation der normierten Schätzwerte mit den Gewichtsfaktoren $g_1$ und $g_2$, wobei nach der Summation das Ergebnis modulo 1 (d.h. nur die Nachkommastellen) zu nehmen ist. Es ergibt sich der endgültige Schätzwert $\Phi_{mess}$ für den zu bestimmenden Winkel $\Phi$ gemäß

$$\frac{\Phi_{mess}}{2 \cdot \pi} = \left[ \frac{\Phi_{s1}}{2 \cdot \pi} \cdot g_1 + \frac{\Phi_{s2}}{2 \cdot \pi} \cdot g_2 \right]_{mod(1)} \qquad \text{(Gleichung (4))}.$$

Für die Gewichtsfaktoren muß gelten $g_1 + g_2 = 1$. In vielen Anwendungen werden derartige Gewichtsfaktoren zu je 0,5 gesetzt. Eine Verbesserung bei gleich wahrscheinlichen additiven Messfehlern in $\alpha_1$ und $\alpha_2$ ergibt sich, wenn die im Sinne des minimalen Fehlerquadrats optimale Gewichtung gemäß

$$g_i = \frac{n_i^2}{\sum_1^N n_i^2} \qquad \text{(Gleichung (5))}$$

eingesetzt wird. N ist die Anzahl der gleichzeitig betrachteten Phasenmesswerte, im vorliegenden Beispiel gilt N = 2.

Die ersten zwei Zeilen von Figur 1 wurden bereits erläutert. Die dritte Zeile zeigt einen mit dem erfindungsgemäßen Verfahren bestimmten Schätzwert $\Phi_{mess}$ für das bereits genannte Beispiel $n_1 = 13$ und $n_2 = 17$ über dem mechanischen Winkel $\Phi$.

Die erwähnte Gewichtung hat den Vorteil, dass die Bestimmung der normierten Schätzwerte $\Phi_{s1}/2\pi$ und $\phi_{s2}/2\pi$ nicht explizit durchgeführt werden muß. Es ist ausreichend, jeweils den Zähler der Brüche auf der rechten Seite von Gleichung (2) zu bestimmen. Die Division durch $n_1$ bzw. $n_2$ entfällt, da die Gewichtsfaktoren gi in Gleichung (5) die Ausdrücke $n_1^2$ bzw. $n_2^2$ im Zähler enthalten.

Eine besonders einfache Realisierung erhält man, wenn die Gewichtsfaktoren eine weitere leichte Variierung erfahren, so dass auch die Division durch

$$\sum_1^N n_i^2 \qquad \text{(Gleichung (6))}$$

bzw. die Multiplikation mit dem Kehrwert ebenfalls entfällt. Hierzu wählt man

$$g'_i = \frac{n_i \cdot w_i}{2^q} \text{ mit } \sum_1^N w_i \cdot n_i = 2^q \qquad \text{(Gleichungen (7), (8))}$$

mit ganzen Zahlen $w_i$ so, dass die neuen Gewichte $g'_i$ den idealen Gewichten $g_i$ gemäß Gleichung (5) möglichst nahe kommen. Die natürliche Zahl q bestimmt dabei die erreichbare Genauigkeit.

Mit einer derartigen Gewichtung entfallen nun sämtliche Divisionen, es ist lediglich eine Division durch die Zweierpotenz $2^q$ notwendig, was bei einer Zweierkomplementdarstellung durch eine einfache Stellenverschiebung um q Stellen nach rechts zu bewerkstelligen ist. Die Summation wird mit q Bits ohne Beachtung von Teilsummenüberläufen berechnet.

Im oben bereits erwähnten Beispiel ($n_1 = 13$, $n_2 = 17$) können für q = 12 Bit die ganzen Zahlen $w_1 = 115$ und $w_2 = 153$ verwendet werden. Die sich ergebenden Gewichtsfaktoren weichen damit um ca. 1% vom idealen Wert nach Gleichung (5) ab. Exakt gilt

$$g'_1 + g'_2 = \frac{w_1 \cdot n_1}{2^q} + \frac{w_2 \cdot n_2}{2^q} = \frac{115 \cdot 13}{4096} + \frac{153 \cdot 17}{4096} = \frac{4096}{4096} = 1$$

$$\text{(Gleichung (9))}$$

Sind $n_1$ und $n_2$ nicht teilerfremd, so dass sie einen gemeinsamen Teiler L mit

$$L = GGT(n_1, n_2) > 1 \qquad\qquad \text{(Gleichung (10))}$$

aufweisen, kann das beschriebene Verfahren ebenfalls verwendet werden. Anstelle der Periodenzahlen sind dann die durch L dividierten Werte zu verwenden. Als Ergebnis erhält man in diesem Fall einen Schätzwert für das L-fache des Winkelwertes $\Phi$.

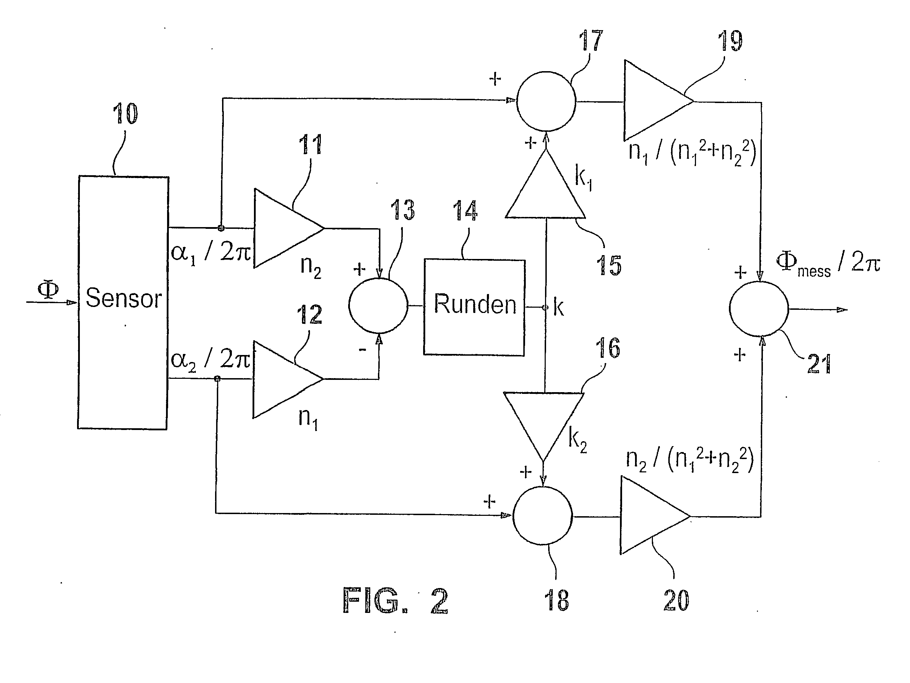

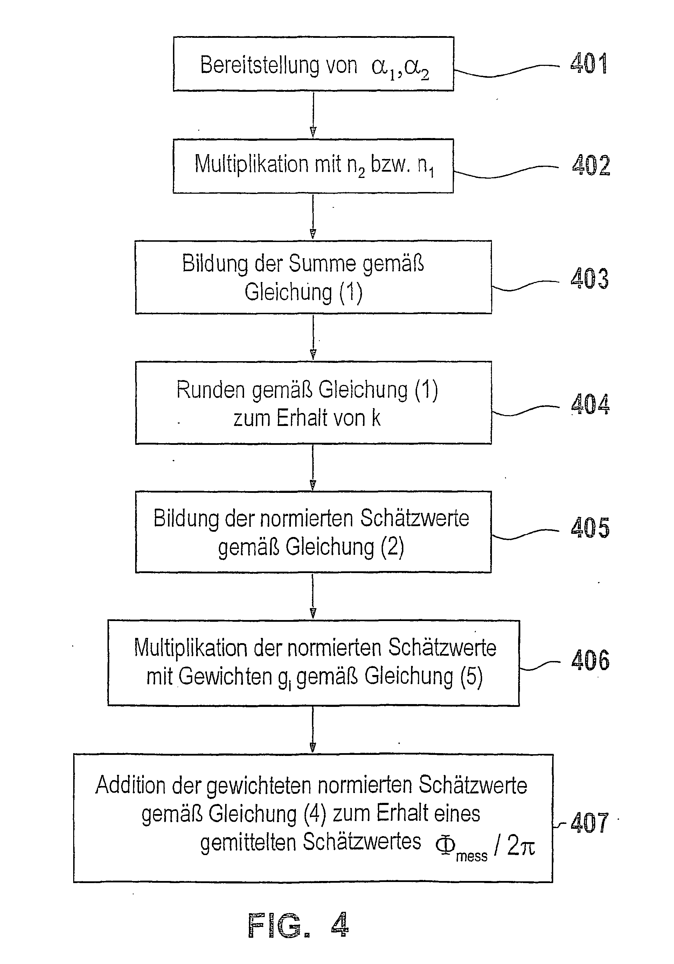

Eine bevorzugte Schaltung zur Durchführung des erfindungsgemäßen Verfahrens ist in Figur 2 dargestellt. Der Anschaulichkeit halber wird hierbei auf Fig. 4 verwiesen, in der ein Flussdiagramm der mit der Schaltung realisierten Ausführungsform des erfindungsgemäßen Verfahrens dargestellt ist.

Der in Fig. 2 mit 10 bezeichnete Sensor liefert die zwei Phasenwerte $\alpha_1$ und $\alpha_2$ (Schritt 401) . Diese durch Division durch $2\pi$ normierten Messsignale werden in Multiplikationsgliedern 11 bzw. 12 mit den Periodenzahlen der einzelnen Spuren des Sensors 10, $n_2$ bzw. $n_1$, multipliziert (Schritt 402). In einem Summierglied erfolgt die Summenbildung gemäß Gleichung (1) (Schritt 403). Die Rundung gemäß Gleichung (1) erfolgt anschließend in einem Rundungsglied 14 (Schritt 404). Der mittels des Rundungsgliedes 14 bereitgestellte Arbeitswert k wird, zum Erhalt der beiden normierten Schätzwerte $\phi_{s1}/2\pi$ bzw. $\phi_{s2}/2\pi$ zunächst mit den Werten $k_1$ bzw. $k_2$ multipliziert. $k_1$ und $k_2$, wie erwähnt, gemäß Gleichung (3) wählbar. Zum Erhalt der jeweiligen Zähler der rechten Seite von Gleichung (2) werden die Phasenwerte $\alpha_1/2\pi$ und $\alpha_2/2\pi$ in Summiergliedern 17 bzw. 18 zu den Ausgängen der Multiplizierglieder 15 bzw. 16 addiert. Die Durchführung der Rechenschritte gemäß Gleichung (2) erfolgt in dem Flussdiagramm in Schritt 405.

In Multipliziergliedern 19 bzw. 20 erfolgt die Multiplikation mit den Gewichten $g_i$ gemäß Gleichung (5) (Schritt 406). Die Ausgangswerte der Multiplizierglieder 19 bzw. 20 werden einem Addierer 21 zugeführt, mittels des der Wert $\Phi_{mess}/2\pi$ gemäß Gleichung (4) ermittelbar ist (Schritt 407).

In Figur 3 ist eine Schaltung zur Bildung der gewichteten Summe mit den Gewichten $g'_i$ nach Gleichung (7) für ein System mit N Phasensignalen dargestellt. Man erkennt, dass die jeweilige normierten Schätzwerte $\phi_{si}/2\pi$ zunächst mit den jeweiligen Periodenzahlen $n_i$ multipliziert werden. In anschließenden Multipliziergliedern 30 erfolgt die jeweilige Multiplikation mit den ganzen Zahlen $w_i$. Die Ausgangswerte der Multiplizierglieder 30 werden in einem Summierglied 31 aufsummiert, die so erhaltene Summe wird (gemäß Gleichung (7)) in einem Multiplizierglied 32 mit dem Wert $2^{-q}$ multipliziert. Der so erhaltene Wert ist der Wert $\Phi_{mess}/2\pi$ gemäß Gleichung (4) mit den Gewichten $g'_i$ gemäß Gleichung (7).

Mit dem erfindungsgemäßen Verfahren sind die Vorteile des in der Beschreibungseinleitung erwähnten modifizierten Noniusverfahrens realisierbar und werden durch die erfindungsgemäß vorgeschlagene Gewichtung weiter verbessert.

**Patentansprüche**

1. Verfahren zur Bestimmung eines Drehwinkels oder eines Weges, mit folgenden Schritten:

- Bereitstellung wenigstens zweier Phasenwerte $\alpha_i$ (i = 1, 2... N) durch Abtastung von den Phasenwerten jeweils zugeordneten, unterschiedliche Periodenzahlen $n_i$ aufweisenden Sensoren (10),

- Berechnung eines als ganze Zahl darstellbaren Arbeitswertes k auf der Grundlage der gemessenen Phasenwerte $\alpha_i$ und der diesen jeweils zugeordneten Periodenzahlen $n_i$,
- Berechnung wenigstens zweier normierter Schätzwerte $\phi_{si}/2\pi$ auf der Grundlage der Phasenwerte $\alpha_i$, der Periodenzahlen $n_i$, des Arbeitswertes k und die Periodenzahlen $n_i$ miteinander in eine Normierungsbeziehung setzender ganzzahliger Arbeitsfaktoren $k_i$, und
- gewichtete Summation der Schätzwerte $\phi_{si}/2\pi$ zum Erhalt eines gemittelten Schätzwertes $\Phi_{mess}/2\pi$, welcher den zu bestimmenden Drehwinkel oder Weg darstellt.

**2.** Verfahren nach Anspruch 1, **dadurch gekennzeichnet, dass** im Falle zweier bereitgestellter Phasenwerte $\alpha_1$, $\alpha_2$ der Arbeitswert k durch Rundung des Ausdrucks

$$\left[ \frac{\alpha_1 \cdot n_2 - \alpha_2 \cdot n_1}{2 \cdot \pi} \right]$$

berechnet wird, wobei $n_1$ die Periodenzahl des dem Phasenwert $\alpha_1$, und $n_2$ die Periodenzahl des dem Phasenwert $\alpha_2$ zugeordneten Sensors (10) ist.

**3.** Verfahren nach einem der Ansprüche 1 oder 2, **dadurch gekennzeichnet, dass** im Falle zweier bereitgestellter Phasenwerte $\alpha_1$, $\alpha_2$ die Normierungsbeziehung der Periodenzahlen $n_1$, $n_2$ und der Arbeitsfaktoren $k_1$ und $k_2$ gewählt wird als $k_2 \cdot n_1 - k_1 \cdot n_2 = 1$.

**4.** Verfahren nach einem der vorstehenden Ansprüche, **dadurch gekennzeichnet, dass** die normierten Schätzwerte

$\dfrac{\Phi_{si}}{2\pi}$ gemäß einer Gleichung der Form

$$\frac{\Phi_{si}}{2 \cdot \pi} = \frac{\dfrac{\alpha_i}{2 \cdot \pi} + k \cdot k_i}{n_i}$$

berechnet werden.

**5.** Verfahren nach einem der vorstehenden Ansprüche, **dadurch gekennzeichnet, dass** die gewichtete Summation

$\dfrac{\Phi_{mess}}{2\pi}$ der wenigstens zwei normierten Schätzwerte gemäß einer Gleichung der Form

$$\frac{\Phi_{mess}}{2 \cdot \pi} = \sum_{i=1}^{N} \left[ \frac{\Phi_{si}}{2 \cdot \pi} \cdot g_i \right]_{\mathrm{mod}(1)}$$

berechnet wird, wobei $g_i$ Gewichtungsfaktoren darstellen, für die gilt

$$\sum_{i=1}^{N} g_i = 1.$$

**6.** Verfahren nach Anspruch 5, **dadurch gekennzeichnet, dass** im Falle zweier bereitgestellter Phasenwerte $\alpha_1$, $\alpha_2$ die Gewichtungsfaktoren $g_1 = g_2 = 0{,}5$ gesetzt werden.

**7.** Verfahren nach Anspruch 5, **dadurch gekennzeichnet, dass** die Gewichtungsfaktoren gemäß einer Beziehung der Form

$$g_i = \frac{n_i^2}{\sum_1^N n_i^2}$$

berechnet werden.

**8.** Verfahren nach Anspruch 5, **dadurch gekennzeichnet, dass** die Gewichtungsfaktoren $g_i$ gemäß einer Beziehung der Form

$$g'_i = \frac{n_i \cdot w_i}{2^q} \; \text{mit} \; \sum_{i=1}^N w_i \cdot n_i = 2^q$$

berechnet werden, wobei $w_i$ ganze Zahlen darstellen, die derart gewählt werden, dass die $g_i'$ die $g_i$ möglich genau approximieren.

**9.** Vorrichtung zur Bestimmung eines Drehwinkels oder eines Weges, mit

- Mitteln zur Bereitstellung wenigstens zweier Phasenwerte $\alpha_i$ (i = 1, 2, ...N) durch Abtastung von den Phasenwerten jeweils zugeordneten, unterschiedliche Periodenzahlen $n_i$ aufweisenden Sensoren (10),
- Mitteln (13, 14) zur Berechnung eines als ganze Zahl darstellbaren Arbeitswertes k auf-der Grundlage der gemessenen Phasenwerte $\alpha_i$ und der diesen jeweils zugeordneten Periodenzahlen $n_i$,
- Mitteln (15, 16, 17, 18) zur Berechnung wenigstens zweier normierter Schätzwerte $\Phi_{si}/2\pi$ auf der Grundlage der Phasenwerte $\alpha_i$, der Periodenzahl $n_i$, des Arbeitswertes k und die Periodenzahlen $n_i$ miteinander in eine Normierungsbeziehung setzender ganzzahliger Arbeitsfaktoren $k_i$, und
- Mitteln (21) zur gewichteten Summation der normierten Schätzwerte zum Erhalt eines gemittelten Schätzwertes $\Phi_{mess}/2\pi$, welcher den zu bestimmenden Drehwinkel oder Weg darstellt.

**Claims**

**1.** Method for determining an angle of rotation or a displacement, having the following steps:

- providing at least two phase values $\alpha_1$ (i = 1, 2 ... N) by scanning sensors (10) which are respectively assigned to the phase values and have different period numbers $n_i$,
- calculating an operating value k, which can be represented as an integer, on the basis of the measured phase values $\alpha_i$ and the period numbers $n_i$ respectively assigned thereto,
- calculating at least two normalized estimates $\Phi_{si}/2\pi$ on the basis of the phase values $\alpha_i$, the period numbers $n_i$, the operating value k, and integral operating factors $k_i$ which set the period numbers $n_i$ into a normalization relationship with one another, and
- weighted summation of the estimates $\Phi_{si}/2\pi$ in order to obtain an averaged estimate $\Phi_{mess}/2\pi$ which represents the angle of rotation or displacement to be determined.

**2.** Method according to Claim 1, **characterized in that** in the case of two provided phase values $\alpha_1$, $\alpha_2$ the operating value k is calculated by rounding the expression

$$\left[\frac{\alpha_1 \cdot n_2 - \alpha_2 \cdot n_1}{2 \cdot \pi}\right],$$

$n_1$ being the period number of the sensor (10) assigned to the phase value $\alpha_1$ and $n_2$ the period number of the sensor (10) assigned to the phase value $\alpha_2$.

3. Method according to either of Claims 1 and 2, **characterized in that** the normalization relationship of the period numbers $n_1$, $n_2$ and the operating factors $k_1$ and $k_2$ are selected as $k_2 \cdot n_i - k_i \cdot n_2 = 1$ in the case of two provided phase values $\alpha_1$, $\alpha_2$.

4. Method according to one of the preceding claims, **characterized in that** the normalized estimates $\dfrac{\Phi_{si}}{2\pi}$ is calculated in accordance with an equation of the form

$$\frac{\Phi_{si}}{2 \cdot \pi} = \frac{\dfrac{\alpha_i}{2 \cdot \pi} + k \cdot k_i}{n_i}.$$

5. Method according to one of the preceding claims, **characterized in that** the weighted summation $\dfrac{\Phi_{mess}}{2\pi}$ of the at least two normalized estimates is calculated in accordance with an equation of the form

$$\frac{\Phi_{mess}}{2 \cdot \pi} = \sum_{i=1}^{N} \left[\frac{\Phi_{si}}{2 \cdot \pi} \cdot g_i\right]_{mod(1)},$$

$g_i$ representing weighting factors for which it holds that

$$\sum_{i=1}^{N} g_i = 1.$$

6. Method according to Claim 5, **characterized in that** the weighting factors are set as $g_i = g_2 = 0.5$ in the case of two provided phase values $\alpha_1$, $\alpha_2$.

7. Method according to Claim 5, **characterized in that** the weighting factors are calculated in accordance with a relationship of the form

$$g_i = \frac{n_i^2}{\sum_1^N n_i^2}.$$

8. Method according to Claim 5, **characterized in that** the weighting factors $g_i$ are calculated in accordance with a relationship of the form

$$g'_i = \frac{n_i \cdot w_i}{2^q}, \text{ where } \sum_{i=1}^{N} w_i \cdot n_i = 2^q,$$

$w_i$ representing integers which are selected in such a way that the $g'_i$ approximate the $g_i$ as exactly as possible.

9.  Device for determining an angle of rotation or a displacement, having

    - means for providing at least two phase values $\alpha_i$ (i = 1, 2, ... N) by scanning sensors (10) which are respectively assigned to the phase values and have different period numbers $n_i$,
    - means (13, 14) for calculating an operating value k, which can be represented as an integer, on the basis of the measured phase values $\alpha_i$ and the period numbers $n_i$ respectively assigned thereto,
    - means (15, 16, 17, 18) for calculating at least two normalized estimates $\Phi_{si}/2\pi$ on the basis of the phase values $\alpha_i$, the period numbers $n_i$, the operating value k and integral operating factors $k_i$ which set the period numbers $n_i$ in a normalization relationship with one another, and
    - means (21) for the weighted summation of the normalized estimates in order to obtain an averaged estimate $\Phi_{mess}/2\pi$ which represents the angle of rotation or displacement to be determined.

**Revendications**

1.  Procédé de détermination d'un angle de rotation ou d'un parcours, qui présente les étapes suivantes :

    - formation d'au moins deux valeurs de phase $\alpha_i$ (i = 1, 2, ..., N) par échantillonnage des valeurs de phase de détecteurs (10) respectifs associés qui présentent des nombres différents de périodes ni,
    - calcul d'une valeur de travail k qui peut être représentée sous la forme d'un nombre entier, sur base des valeurs de phase $\alpha_i$ mesurées et des nombres de périodes ni qui leurs sont associés,
    - calcul d'au moins deux valeurs d'estimation normalisées $\Phi_{si}/2\pi$ sur base des valeurs de phase $\alpha_i$, des nombres de périodes ni, de la valeur de travail k, les nombres de périodes ni étant reliés les uns aux autres en facteurs de travail $k_i$ entiers qui définissent une relation de normalisation et
    - addition pondérée des valeurs d'estimation $\Phi_{si}/2\pi$ pour obtenir une valeur moyenne d'estimation $\Phi_{mess}/2\pi$ qui représente l'angle de rotation ou le parcours à déterminer.

2.  Procédé selon la revendication 1, **caractérisé en ce qu'**au cas où deux valeurs de phase $\alpha_1$, $\alpha_2$ sont formées, la valeur de travail k est calculée comme arrondi de l'expression

$$\left[ \frac{\alpha_1 \cdot n_2 - \alpha_2 \cdot n_1}{2 \cdot \pi} \right]$$

dans laquelle $n_i$ représente le nombre de périodes du détecteur (10) associé à la valeur de phase $\alpha_1$ et $n_2$ le nombre de périodes du détecteur (10) associé à la valeur de phase $\alpha_2$.

3.  Procédé selon l'une des revendications 1 ou 2, **caractérisé en ce qu'**au cas où deux valeurs de phase $\alpha_1$, $\alpha_2$ sont formées, la relation de normalisation des nombres de périodes $n_1$, $n_2$ et des facteurs de travail $k_1$ et $k_2$ sélectionnée est $k_2 \cdot n_1 - k_1 . n_2 = 1$.

4.  Procédé selon l'une des revendications précédentes, **caractérisé en ce que** les valeurs estimées normalisées $\Phi_{si}/2\pi$ est calculé par une équation de forme

EP 1 407 230 B1

$$\frac{\Phi_{si}}{2 \cdot \pi} = \frac{\frac{\alpha_i}{2 \cdot \pi} + k \cdot k_i'}{n_i}$$

**5.** Procédé selon l'une des revendications précédentes, **caractérisé en ce que** la somme pondérée $\Phi_{mess}/2\pi$ des deux ou plusieurs valeurs d'estimation normalisées est calculée par une équation de forme

$$\frac{\Phi_{mess}}{2 \cdot \pi} = \sum_{i=1}^{N} \left[\frac{\Phi_{si}}{2 \cdot \pi} \cdot g_i\right]_{mod(1)}$$

dans laquelle les $g_i$ représentent des facteurs de pondération pour lesquels on a

$$\sum_{i=1}^{N} g_i = 1.$$

**6.** Procédé selon la revendication 5, **caractérisé en ce qu'**au cas où deux valeurs de phase $\alpha_1$, $\alpha_2$ sont formées, les facteurs de pondération sont posés à $g_1 = g_2 = 0,5$.

**7.** Procédé selon la revendication 5, **caractérisé en ce que** les facteurs de pondération sont calculés par une équation de forme

$$g_i = \frac{n_i^2}{\sum_{1}^{N} n_i^2}$$

**8.** Procédé selon la revendication 5, **caractérisé en ce que** les facteurs de pondération $g_i$ sont calculés par une équation de la forme

$$g'i = \frac{n_i \cdot w_i}{2^q}$$

avec

$$\sum_{i=1}^{N} w_i \cdot n_i = 2^q$$

dans laquelle les $w_i$ représentent des nombres entiers sélectionnés de telle sorte que les $g'_i$ approchent aussi précisément que possible les $g_i$.

**9.** Dispositif de détermination d'un angle de rotation ou d'un parcours, qui présente :

- des moyens de formation d'au moins deux valeurs de phase $\alpha_i$ (i = 1, 2, ..., N) par échantillonnage des valeurs de phase de détecteurs (10) associés respectifs qui présentent différents nombres de périodes ni,
- des moyens (13, 14) de calcul d'une valeur de travail k qui peut être représentée sous la forme d'un nombre entier, sur base des valeurs de phase $\alpha_i$ mesurées et des nombres de périodes ni respectifs associés,
- des moyens (15, 16, 17, 18) de calcul d'au moins deux valeurs d'estimation normalisées $\Phi_{si}/2\pi$ sur base des

12

valeurs de phase $\alpha_i$, des nombres de périodes ni, de la valeur de travail k, les nombres de périodes ni étant associés les uns aux autres en des facteurs de travail $k_i$ entiers qui définissent une relation de normalisation et
- des moyens (21) d'addition pondérée des valeurs d'estimation normées pour obtenir une valeur d'estimation moyenne $\Phi_{mess}/2\pi$ qui représente l'angle de rotation ou le parcours à déterminer.

$\alpha_1 / (2\pi)$

$\alpha_2 / (2\pi)$

$\overline{\Phi}_{mess} / (2\pi)$

$\Phi$

FIG. 1

$\dfrac{\overline{\Phi}_{S1}}{2\pi} * n_1$

$\dfrac{\overline{\Phi}_{S2}}{2\pi} * n_2$

$\dfrac{\overline{\Phi}_{SN}}{2\pi} * n_N$

30

30

$W_1$

$W_2$

$W_N$

30

31

$2^{-q}$

32

$\dfrac{\overline{\Phi}_{mess}}{2\pi}$

FIG. 3

FIG. 2

EP 1 407 230 B1

Bereitstellung von $\alpha_1, \alpha_2$ —— 401

Multiplikation mit $n_2$ bzw. $n_1$ —— 402

Bildung der Summe gemäß
Gleichung (1) —— 403

Runden gemäß Gleichung (1)
zum Erhalt von k —— 404

Bildung der normierten Schätzwerte
gemäß Gleichung (2) —— 405

Multiplikation der normierten Schätzwerte
mit Gewichten $g_i$ gemäß Gleichung (5) —— 406

Addition der gewichteten normierten Schätzwerte
gemäß Gleichung (4) zum Erhalt eines
gemittelten Schätzwertes $\Phi_{mess} / 2\pi$ —— 407

# FIG. 4

**IN DER BESCHREIBUNG AUFGEFÜHRTE DOKUMENTE**

**In der Beschreibung aufgeführte Patentdokumente**

- DE OS19506938 A
- DE P1004260